# EUROPÄISCHE PATENTSCHRIFT

(11) **EP 4 198 214 B1**
(45) Veröffentlichungstag und Bekanntmachung des Hinweises auf die Patenterteilung: **16.04.2025**
(21) Anmeldenummer: 22171265.6
(22) Anmeldetag: 03.05.2022
(51) Int. Cl.: E03D 11/14

(54) **WANDHÄNGENDE TOILETTE**
WALL-MOUNTED TOILET
TOILETTES SUSPENDUES

(30) Priorität: 17.12.2021 CN 202111558595
(43) Veröffentlichungstag der Anmeldung: 21.06.2023
(73) Patentinhaber: Geberit International AG, 8645 Jona (CH)
(72) Erfinder: ZHOU, Junfeng, Shanghai, 201802 (CN); DAI, Cong, Shanghai, 201802 (CN); HE, Feng, Shanghai, 201802 (CN); YOU, Hang, Shanghai, 201802 (CN); YUAN, Yihui, Shanghai, 201802 (CN); LI, Li, Shanghai, 201802 (CN); YAO, Jun, Shanghai, 201802 (CN)
(74) Vertreter: Szynka Smorodin Patentanwälte Partnerschaft mbB

(56) Entgegenhaltungen:
- EP-A1- 2 447 427
- EP-A1- 2 993 273
- EP-A1- 3 070 212
- WO-A1-2010/143965
- WO-A1-2012/051729
- DE-A1- 102013 019 174
- JP-A- 2007 255 155
- JP-A- H10 121 554
- US-A1- 2017 051 489

## Beschreibung

### Technischer Bereich:

Die vorliegende Erfindung betrifft eine wandhängende Toilette.

### Stand der Technik

Bei aktuell auf dem Markt befindlichen Produkten wird der smarte Motorteil der smarten Toilette aufgrund seiner Größe in der Regel oberhalb des ToilettenHauptkörpers (hinter der Sitzbrille) installiert. Da der Platz für die Installation der Steuereinheit oberhalb des Toiletten-Hauptkörpers begrenzt ist, wird häufig zu hoch gestapelt, was oft zu einer komplexen und verwirrenden Anordnung der Verdrahtung innerhalb der Steuereinheit und der verschiedenen smarten Vorrichtungen führt; das ist von Nachteil für den Betrieb und die Lebensdauer der smarten Vorrichtungen.

Beispiele aus dem Stand der Technik für smarte Toiletten mit Gehäusen für smarte Vorrichtungen auf einem hinteren Teil des jeweiligen Toiletten-Hauptkörpers zeigen die EP 2 447 427 A1, die EP 2 993 273 A1 und die EP 3 070 212 A1. Die JP 2007 255155 A zeigt statt dessen die Unterbringung einer smarten Vorrichtung einer Toilette in einem hinteren Kasten zwischen einem Toiletten-Hauptkörper und der Wand.

### Inhalt der Erfindung:

Die Erfindung bietet eine wandhängende smarte Toilette mit einem vergrößerten Steuereinheit-Teil für eine rationellere und angemessenere interne Verdrahtung und Anordnung der Vorrichtungen. Die hinteren Seitenwände des Toiletten-Hauptkörpers verleihen dem ganzen Aufbau eine bessere Optik.

Eine wandhängende Toilette, die einen Sitzdeckel, eine Sitzbrille, eine smarte Vorrichtung, einen hinteren Kasten und einen Toiletten-Hauptkörper umfasst, wobei die smarte Vorrichtung ein smartes System und ein Gehäuse umfasst, das das smarte System abdeckt;
wobei das Gehäuse einen ersten Gehäuseteil und einen zweiten Gehäuseteil umfasst, der zweite Gehäuseteil im hinteren Kasten angebracht ist und der hintere Kasten hinter dem Toiletten-Hauptkörper angeordnet und mit dem hinteren Teil des Toiletten-Hauptkörpers verbunden ist
wobei der erste Gehäuseteil auf dem Toiletten-Hauptkörper angebracht ist und der Sitzdeckel koaxial mit der Sitzbrille auf dem ersten Gehäuseteil schwenkbar montiert ist.

Vorzugsweise umfasst der hintere Kasten eine obere Abdeckplatte, eine erste Seitenplatte, eine zweite Seitenplatte und eine untere Verbindungsplatte, wobei die erste Seitenplatte und die zweite Seitenplatte trennbar mit beiden Seiten der oberen Abdeckplatte und der unteren Verbindungsplatte verbunden sind, sodass ein umfassender Rahmen gebildet wird.

Vorzugsweise handelt es sich bei der ersten Seitenplatte und der zweiten Seitenplatte um gekrümmte Platten, deren Krümmung an die Krümmung der Seite des ToilettenHauptkörpers angenähert ist. Wenn die erste Seitenplatte bzw. die zweite Seitenplatte mit dem hinteren Teil des Toiletten-Hauptkörpers verbunden worden ist, dann ist der Übergang zwischen der Seitenplatte und der Seite des Toiletten-Hauptkörpers von vorne nach hinten glatt und eben.

Erfindungsgemäß gibt es im hinteren Kasten auch einen Stützrahmen; mit dem Stützrahmen werden der Toiletten-Hauptkörper und der zweite Gehäuseteil gestützt. Vorzugsweise umfasst der Stützrahmen einen ersten Teil, einen zweiten Teil und einen dritten Teil, wobei der erste Teil parallel zu dem zweiten Teil angeordnet ist und der dritte Teil dazwischen befestigt ist. Der zweite Gehäuseteil ist auf dem ersten Teil und dem zweiten Teil angebracht, wobei der zweite Teil zur Verbindung mit dem Toiletten-Hauptkörper und der erste Teil zur Verbindung mit der Wand dient.

Vorzugsweise weisen der erste Teil und der zweite Teil die gleiche Form auf und sind von vorne nach hinten symmetrisch angeordnet. Im Zwischenbereich zwischen dem ersten Teil und dem zweiten Teil befindet sich eine Durchgangsbohrung für die Durchführung einer Leitung für die Wasserzufuhr. Der auf der Seite des ToilettenHauptkörpers befindliche Teil des Stützrahmens ist mit einer ersten Montagebohrung für den Durchgang eines Aufhängungselements versehen, und der auf der Seite der Wand befindliche Teil des Stützrahmens ist mit einer zweiten Montagebohrung versehen, wobei der Durchmesser der ersten Montagebohrung mindestens gleich groß ist wie der Durchmesser der zweiten Montagebohrung, oder größer ist als dieser. Vorzugsweise besteht der Stützrahmen aus Metall, und er ist mindestens genauso lang wie das Gehäuse. An der Außenseite des ersten Teils bzw. des zweiten Teils befindet sich eine Schicht Dämpfungsschaum, wobei der Dämpfungsschaum die gleiche Form hat wie der erste Teil bzw. der zweite Teil.

Vorzugsweise ist die obere Abdeckplatte auf beiden Seiten mit einer ersten Einstellvorrichtung versehen. Auf der Innenseite der Oberkante der ersten Seitenplatte und der zweiten Seitenplatte ist der erste Klemmmechanismus angebracht. Die erste Einstellvorrichtung und der erste Klemmmechanismus wirken zusammen, sodass die Klemmtiefe der ersten Seitenplatte und der zweiten Seitenplatte auf der Oberseite einstellbar ist.

Vorzugsweise ist die untere Verbindungsplatte auf beiden Seiten mit einer zweiten Einstellvorrichtung versehen, und auf der Innenseite der Unterkante der ersten Seitenplatte und der zweiten Seitenplatte ist der zweite Klemmmechanismus angebracht. Die zweite Einstellvorrichtung und der zweite Klemmmechanismus wirken zusammen, sodass die Klemmtiefe der ersten Seitenplatte und der zweiten Seitenplatte auf der Unterseite einstellbar ist.

Vorzugsweise umfasst die erste Einstellvorrichtung eine erste Platte, einen ersten Schraubbolzen, einen ersten Positionierungsblock, eine erste Feder und einen ersten Einstellblock, wobei die erste Platte vertikal unter der oberen Abdeckplatte angebracht ist. Der Abstand von den Kanten beider Seiten der oberen Abdeckplatte entspricht ungefähr der Länge der ersten Einstellvorrichtung. Der erste Positionierungsblock ist mittig an der ersten Platte angebracht und weist zur Außenseite, wobei die Außenseite die Seite ist, die mit der ersten Seitenplatte bzw. der zweiten Seitenplatte auf Stoß verbunden werden kann. Die ersten Schraubbolzen sind mit der Mittellinie der ersten Platte als Achse symmetrisch an beiden Seiten des ersten Positionierungsblocks angebracht. Am ersten Schraubbolzen ist die erste Schraubbohrung angebracht. Die erste Feder lässt sich auf den ersten Schraubbolzen aufsetzen, und die Länge der ersten Feder ist größer als die Länge des ersten Schraubbolzens. In der Mitte des ersten Einstellblocks befindet sich der erste Hohlraum, wobei der erste Hohlraum leer ist, um den Positionierungsblock aufnehmen zu können. Der erste Einstellblock ist auf der Rückseite auf beiden Seiten mit einem ersten Schlitz versehen, wobei die Größe des ersten Schlitzes so bemessen ist, dass er die mit dem Schraubbolzen verbundene Feder aufnehmen kann. Der erste Einstellblock ist an der Außenseite mit einer zweiten Schraubbohrung versehen, wobei Größe und Position der zweiten Schraubbohrung der ersten Schraubbohrung entsprechen. Der erste Einstellblock kann über den ersten Schlitz auf die ersten Schraubbolzen aufgesetzt werden. Der erste Positionierungsblock kann in den ersten Hohlraum eingebettet werden. Durch Festdrehen des Einstellblocks mithilfe von Schrauben wird die Verbindung zwischen Seitenplatte und oberer Abdeckplatte hergestellt, und die Montageposition der Seitenplatte lässt sich anhand der Ebenheit mit der Krümmung des ToilettenHauptkörpers einstellen.

Vorzugsweise ist der erste Einstellblock an der Oberseite mit einem L-förmigen elastischen Element versehen, wobei der L-förmige Teil mit der Oberkante des ersten Einstellblocks eine Nut bildet. Das L-förmige elastische Element an der Oberseite ist mit einem trapezförmigen Klemmteil versehen, welches trapezförmige Klemmteil an den ersten Klemmmechanismus angepasst ist und eine Klemmverbindung eingehen kann.

Vorzugsweise ist der erste Einstellblock auf beiden Seiten mit einem Flügel versehen, und die erste Seitenplatte und die zweite Seitenplatte sind auf beiden Seiten mit einem Seitenflansch versehen. Wenn die erste Seitenplatte bzw. die zweite Seitenplatte mit der ersten Einstellvorrichtung montiert wird, können die ersten Flügel gegen die Innenwand der ersten Seitenplatte bzw. der zweiten Seitenplatte anliegen. Vorzugsweise umfasst die zweite Einstellvorrichtung eine zweite Platte, einen zweiten Positionierungszylinder, einen zweiten Schraubbolzen, ein zweites Befestigungselement, einen zweiten Flügel, eine zweite Feder und einen zweiten Einstellblock. Die zweite Platte ist vertikal an den beiden Endkanten der unteren Verbindungsplatte angebracht. Der zweite Schraubbolzen ist in der Mitte der zweiten Platte angebracht und weist zur Außenseite. Am zweiten Schraubbolzen befindet sich die dritte Schraubbohrung. Die Außenseite ist die Seite, die mit der ersten Seitenplatte bzw. der zweiten Seitenplatte auf Stoß verbunden werden kann. Der zweite Positionierungszylinder ist an beiden Seiten am zweiten Schraubbolzen angebracht. Die zweite Feder ist auf dem zweiten Positionierungszylinder angebracht, wobei die zweite Feder länger ist als der zweite Positionierungszylinder. Die untere Verbindungsplatte ist auf beiden Seiten mit einem Paar von zweiten Flanschen versehen, die sich auf beiden Seiten horizontal nach außen erstrecken. An den zweiten Flanschen befinden sich die zweiten Befestigungselemente, die zu beiden Seiten des Positionierungszylinders angebracht sind. Die zweiten Flügel sind an den zweiten Flanschen angebracht und befinden sich an den beiden Seiten der zweiten Befestigungselemente. Die zweiten Flügel können an der Innenwand der ersten Seitenwand bzw. der zweiten Seitenwand anliegen.

Vorzugsweise umfasst der zweite Einstellblock einen vertikalen Teil und einen horizontalen Teil, wobei der vertikale Teil mit dem horizontalen Teil auf seiner Vorderseite eine L-Form bildet. Der vertikale Teil weist in der Mitte eine vierte Schraubbohrung auf, deren Position und Größe der dritten Schraubbohrung entspricht. Der vertikale Teil weist in der Mitte seiner Rückseite einen zweiten Schlitz auf, wobei sich auf beiden Seiten des zweiten Schlitzes an der Rückseite ein dritter Schlitz befindet. Der horizontale Teil ist mit einer zweiten Nut versehen, welche zweite Nut in den zweiten Klemmmechanismus eingerastet werden kann. Der zweite Einstellblock wird über den zweiten Schlitz und den dritten Schlitz auf den zweiten Schraubbolzen und den zweiten Positionierungszylinder gesetzt; der zweite Einstellblock wird mit der Schraube festgezogen, um die Verbindung zwischen Seitenplatte und unterer Verbindungsplatte herzustellen, und die Montageposition der Seitenplatte kann anhand der Ebenheit mit der Krümmung des Toiletten-Hauptkörpers eingestellt werden.

Vorzugsweise umfasst der zweite Klemmmechanismus ein drittes Klemmelement und ein viertes Klemmelement. Auf beiden Seiten des dritten Klemmelements ist jeweils ein viertes Klemmelement angebracht.

Vorzugsweise hat das dritte Klemmelement die Form eines nach unten gekrümmten L, wobei der nach unten gekrümmte Teil sich in die zweite Nut einbetten lässt. Vorzugsweise hat das vierte Klemmelement eine flache Form, und das zweite Befestigungselement ist an der Unterseite mit einem drehbaren elastischen Element versehen, wobei das elastische Element aufgrund seiner Elastizität oben an dem vierten Klemmelement anliegt.

Vorzugsweise ist der nach unten gebogene Abschnitt der Außenkante des Sitzdeckels die seitliche Abdeckung, wobei, wenn der Sitzdeckel in geschlossener Position ist, die seitliche Abdeckung den ersten Gehäuseteil und die Sitzbrille abdeckt.

Der Vorteil der vorliegenden Lösung besteht darin, dass diese Erfindung eine wandhängende smarte Toilette bietet, bei der mithilfe eines Stützrahmens hinter dem Toiletten-Hauptkörper zum Stützen des smarten Steuerteils eine Vergrößerung des Steuerteils ermöglicht wird, wodurch sich eine rationellere und angemessenere interne Verkabelung und Anordnung der Vorrichtungen umsetzen lässt.

Zusätzliche Dekorplatten an den Seiten und am Boden des Metall-Stützrahmens, die durch eine Einstellvorrichtung an die äußere Form des Toiletten-Hauptkörpers angepasst werden, sorgen vorzugsweise für ein verbessertes Erscheinungsbild der gesamten Toilette.

### Beschreibung der beigefügten Zeichnungen:

Weitere Merkmale, Ziele und Vorteile im Zusammenhang mit dieser Erfindung werden anhand der detaillierten Beschreibungen der nicht einschränkenden Ausführungsformen mittels folgender beigefügter Zeichnungen weiter verdeutlicht:
Fig. 1 ist die erste dreidimensionale Strukturzeichnung einer Ausführungsform einer wandhängenden Toilette gemäß dieser Erfindung;
Fig. 2 ist der Seitenschnitt einer Ausführungsform einer wandhängenden Toilette gemäß dieser Erfindung;
Fig. 3 ist die zweite dreidimensionale Strukturzeichnung einer Ausführungsform einer wandhängenden Toilette gemäß dieser Erfindung;
Fig. 4 ist die dritte dreidimensionale Strukturzeichnung einer Ausführungsform einer wandhängenden Toilette gemäß dieser Erfindung;
Fig. 5 ist eine Draufsicht einer Ausführungsform einer wandhängenden Toilette gemäß dieser Erfindung;
Fig. 6 ist eine dreidimensionale Strukturzeichnung der ersten Seitenplatte bzw. der zweiten Seitenplatte einer Ausführungsform dieser Erfindung;
Fig. 7 ist eine dreidimensionale Strukturzeichnung der ersten Einstellvorrichtung einer Ausführungsform dieser Erfindung;
Fig. 8 ist eine dreidimensionale Strukturzeichnung der zweiten Einstellvorrichtung der unteren Verbindungsplatte einer Ausführungsform dieser Erfindung;
Fig. 9 ist eine dreidimensionale Strukturzeichnung des zweiten Einstellblocks einer Ausführungsform dieser Erfindung;
Fig. 10 ist eine dreidimensionale Strukturzeichnung des Stützrahmens einer Ausführungsform dieser Erfindung;
Fig. 11 ist eine dreidimensionale Strukturzeichnung zur Installation des Stützrahmens einer Ausführungsform dieser Erfindung;

Erläuterung der Bezugszeichen in den beigefügten Zeichnungen:
1: Sitzdeckel; 11: seitliche Abdeckung; 2: Sitzbrille; 3: smarte Vorrichtung; 32: Gehäuse; 321: erster Gehäuseteil; 322: zweiter Gehäuseteil; 4: hinterer Kasten; 41: obere Abdeckplatte; 42: erste Seitenplatte; 421: Seitenflansch; 422: erster Klemmmechanismus; 423: zweiter Klemmmechanismus; 4231: drittes Klemmelement; 4232: viertes Klemmelement; 43: zweite Seitenplatte; 44: untere Verbindungsplatte; 441: zweiter Flansch; 5: Toiletten-Hauptkörper; 6: Stützrahmen; 61: erster Teil; 62: zweiter Teil; 63: dritter Teil; 64: erste Durchgangsbohrung; 65: zweite Montagebohrung; 66: erste Montagebohrung; 7: erste Einstellvorrichtung; 71: erste Platte; 72: erster Schraubbolzen; 721: erste Schraubbohrung; 73: erster Positionierungsblock; 74: erste Feder; 75: erster Einstellblock; 751: erster Hohlraum; 753: L-förmiges elastisches Element; 7531: trapezförmiges Klemmteil; 754: erster Flügel; 755: zweite Schraubbohrung; 8: zweite Einstellvorrichtung; 81: zweite Platte; 82: zweiter Einstellzylinder; 83: zweiter Schraubbolzen; 831: dritte Schraubbohrung; 84: zweites Befestigungselement; 841: elastisches Element; 842: dritte Platte; 843: Spalt; 85: zweiter Flügel; 87: zweiter Einstellblock; 871: horizontales Teil; 8711: vierte Schraubbohrung; 8712: zweiter Schlitz; 8713: dritter Schlitz; 872: vertikales Teil; 8721: zweite Nut

### Konkretes Ausführungsbeispiel:

Im Folgenden wird die Erfindung in Verbindung mit den beigefügten Zeichnungen näher beschrieben.

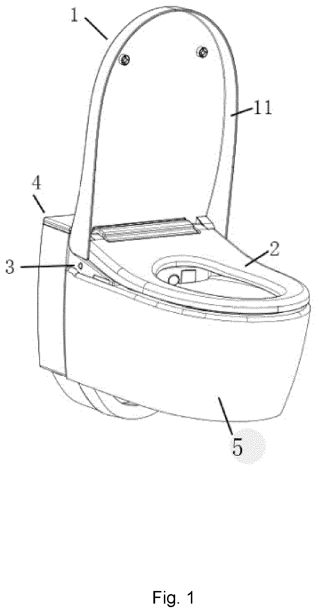

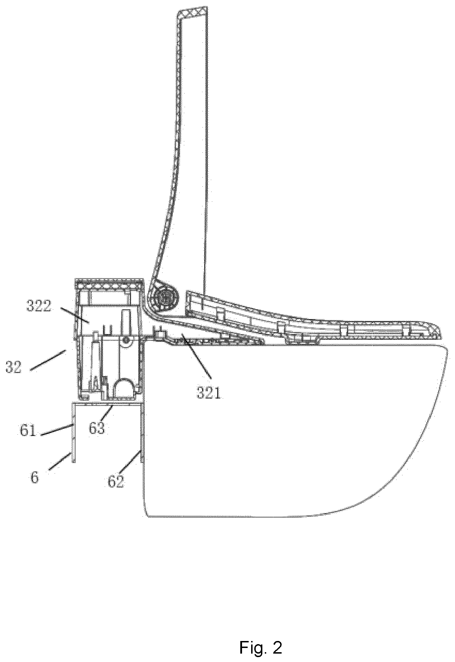

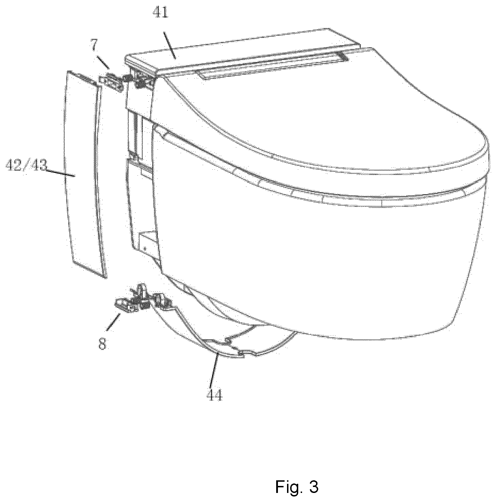

Die Fig.1 und Fig. 2 zeigen eine wandhängende Toilette, die einen Sitzdeckel (1), eine Sitzbrille (2), eine smarte Vorrichtung (3), einen hinteren Kasten (4) und einen Toiletten-Hauptkörper (5) umfasst. Die smarte Vorrichtung (3) umfasst das smarte System (31), ein Gehäuse (32), welches das smarte System (31) abdeckt. Das Gehäuse (32) umfasst einen ersten Gehäuseteil (321) und einen zweiten Gehäuseteil (322), wobei der zweite Gehäuseteil (322) im hinteren Kasten (4) angebracht ist. Der hintere Kasten (4) ist mit dem hinteren Teil des Toiletten-Hauptkörpers (5) verbunden. Der erste Gehäuseteil (321) ist auf dem Toiletten-Hauptkörper (5) angebracht und der Sitzdeckel (1) ist koaxial mit der Sitzbrille (2) auf dem ersten Gehäuseteil (321) schwenkbar montiert. In dieser Ausführungsform ist das Gehäuse der smarten Vorrichtung (3) in zwei hintereinander angeordnete Teile unterteilt, wobei der eine Teil sich am hinteren Ende oberhalb des Toiletten-Hauptkörpers (5), der andere an der Rückseite des Toiletten-Hauptkörpers (5) befindet und sich unter dem zweiten Gehäuseteil (322) ein Stützrahmen (6) befindet,
mit dem die smarte Steuereinheit gestützt wird, wodurch die Steuereinheit sich vergrößern lässt, sodass eine rationellere und angemessenere interne Verkabelung und Anordnung der Vorrichtungen möglich ist. Der hintere Kasten (4) umschließt den zweiten Gehäuseteil (322) und den Stützrahmen (6). Die beiden Seitenplatten (42, 43) werden mithilfe einer Einstellvorrichtung durch Einstellung der Klemmtiefe angepasst, sodass eine möglichst nahtlose Verbindung mit den Seiten des Toiletten-Hauptkörpers (5) hergestellt wird, wodurch das Gesamterscheinungsbild der Toilette verbessert wird. Weiterhin umfasst der hintere Kasten (4), wie in Fig. 3 gezeigt, eine obere Abdeckplatte (41), eine erste Seitenplatte (42), eine zweite Seitenplatte (43) und eine untere Verbindungsplatte (44). Die erste Seitenplatte (42) und die zweite Seitenplatte (43) sind auf beiden Seiten trennbar mit der oberen Abdeckplatte (41) und der unteren Verbindungsplatte (44) verbunden, sodass ein umfassender Rahmen gebildet wird. In diesem Anwendungsbeispiel besteht dieser Rahmen aus vier Seiten, wodurch die Rückseite der Toilette flacher wird, die komplexere innere Struktur verdeckt wird und die Toilette ein optisch ansprechenderes Gesamtbild erhält.

Weiterhin handelt es sich bei der ersten Seitenplatte (42) und der zweiten Seitenplatte (43) um gekrümmte Platten, deren Krümmung an die Krümmung der Seite des Toiletten-Hauptkörpers (5) angenähert ist. Wenn die erste Seitenplatte (42) bzw. die zweite Seitenplatte (43) mit dem hinteren Teil des Toiletten-Hauptkörpers (5) verbunden worden ist, dann ist der Übergang zwischen der Seitenplatte und der Seite des Toiletten-Hauptkörpers (5) von vorne nach hinten glatt und eben.

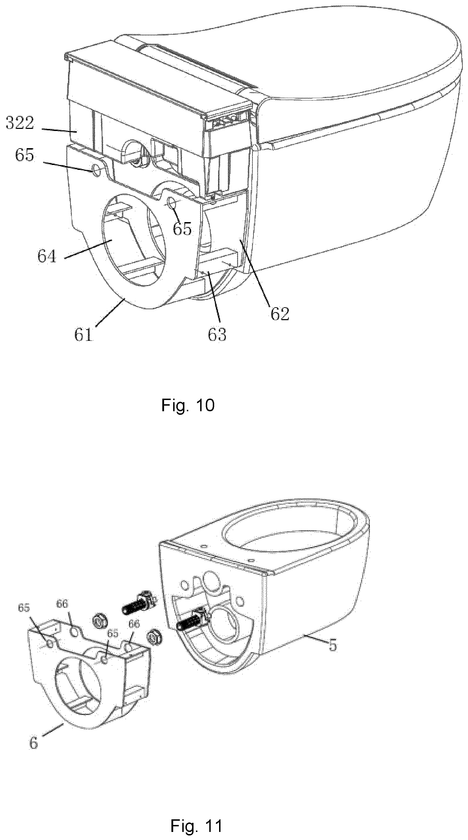

Weiterhin gibt es, wie in Fig. 10 gezeigt, im hinteren Kasten (4) auch einen Stützrahmen (6), mit welchem Stützrahmen (6) der Toiletten-Hauptkörper (5) und der zweite Gehäuseteil (322) gestützt werden. Diese Erfindung ermöglicht eine im Vergleich zu herkömmlichen Vorrichtungen größere smarte Vorrichtung (3). Ein Teil ist im hinteren Kasten (4) der Toilette platziert. Daher ist ein Stützelement erforderlich, welches das Gewicht dieses Teils des Gehäuses (32) trägt, um eine Verbiegung oder Verformung des Gehäuses (32) aufgrund von Spannungen zwischen der Verbindungsstelle zwischen dem ersten Gehäuseteil (321) und dem zweiten Gehäuseteil (322) und der Hinterkante der Toilette bei freier Montage zu verhindern. Außerdem kommt die Unterseite dieses Toiletten-Hauptkörpers nicht mit dem Boden in Berührung; daher ist der Stützrahmen fest mit dem ToilettenHauptkörper verbunden und muss das Gewicht des Toiletten-Hauptkörpers und dann bei der Benutzung auch das Gewicht des Benutzers tragen.

Weiterhin umfasst der Stützrahmen (6) einen ersten Teil (61), einen zweiten Teil (62) und einen dritten Teil (63); der erste Teil (61) ist parallel zum zweiten Teil (62) angeordnet; der dritte Teil (63) ist dazwischen befestigt. Der zweite Gehäuseteil (322) ist auf den ersten Teil (61) und den zweiten Teil (62) aufgesetzt; der zweite Teil (62) dient zum Anschluss an den Toiletten-Hauptkörper (5); der erste Teil dient zum Anschluss an die Wand. Die Länge des dritten Teils (63) kann entsprechend der Größe des Gehäuseteils (322) der smarten Vorrichtung (3) genau eingestellt werden. Die Form des ersten Teils (61) und des zweiten Teils (62) und die Krümmung der Seiten können entsprechend der Kontur der Rückseite des Toiletten-Hauptkörpers ausgeführt werden. Zumindest darf der äußere Umriss des ersten Teils (61) und des zweiten Teils (62) nicht größer sein kann als der Umriss des Toiletten-Hauptkörpers (5); so lässt sich sicherstellen, dass nach der Verbindung des ersten Teils (61) und des zweiten Teils (62) mit den Seitenplatten die erste Seitenplatte (42) bzw. die zweite Seitenplatte (43) mit der seitlichen Kontur des Toiletten-Hauptkörpers (5) übereinstimmt bzw. dieser ähnlich ist.

Weiterhin weisen das erste Teil (61) und das zweite Teil (62) die gleiche Form auf und sind von vorne nach hinten symmetrisch angeordnet. Im Zwischenbereich zwischen dem ersten Teil (61) und dem zweiten Teil (62) befindet sich die erste Durchgangsbohrung (64) für die Durchführung einer Leitung für die Wasserzufuhr und auf beiden Seiten sind jeweils eine erste Montagebohrung (66) und eine zweite Montagebohrung (65) für den Durchgang eines Aufhängungselements angebracht. Der erste Teil (61) und der zweite Teil (62) haben die gleiche Form und Größe, aber der Durchmesser ihrer ersten Montagebohrungen (66) und zweiten Montagebohrungen (65) ist unterschiedlich. Die Montagebohrung wird erst dann festgelegt, wenn bestimmt wurde, welcher Teil des Stützelements an der Wand und welcher am Toiletten-Hauptkörper anliegt. Der Aufbau ist achsensymmetrisch auf Basis des dritten Teils (63) ausgerichtet, sodass bei der Installation von erstem Teil (61) und zweitem Teil (62) am Toiletten-Hauptkörper (5) nicht darauf geachtet werden muss, welcher Teil mit dem Toiletten-Hauptkörper (5) und welcher Teil mit der Wand verbunden wird. Wie in Fig. 11 dargestellt, kann der Techniker jede der beiden Seiten an der Rückseite des Toiletten-Hauptkörpers (5) anbringen, ohne dass der Anschluss der Installation auf der anderen Seite beeinträchtigt wird. Der auf der Seite des Toiletten-Hauptkörpers befindliche Teil des Stützrahmens ist mit einer ersten Montagebohrung (66) für den Durchgang eines Aufhängungselements versehen und der auf der Seite der Wand befindliche Teil des Stützrahmens ist mit einer zweiten Montagebohrung (65) versehen, wobei der Durchmesser der ersten Montagebohrung (66) mindestens gleich groß ist wie der Durchmesser der zweiten Montagebohrung (65) oder größer als dieser. Mittels Aufhängungselement und Befestigungsmutter wird die Verbindung des Stützrahmens (6) mit dem ToilettenHauptkörper (5) hergestellt. Wenn der Durchmesser der zweiten Montagebohrung (65) kleiner ist als der Durchmesser der ersten Montagebohrung (66), kann die Bewegung des Aufhängungselements in der Bohrung kontrolliert werden, die Einbauposition des Toiletten-Hauptkörpers lässt sich also erhöhen und gleichzeitig präzisieren.

Weiterhin besteht der Stützrahmen (6) aus Metall, und seine Länge entspricht der Länge des zweiten Gehäuseteils (322). An der Außenseite des ersten Teils (61) bzw. des zweiten Teils (62) ist eine Schicht Dämpfungsschaum vorgesehen, wobei der Dämpfungsschaum die gleiche Form hat wie der erste Teil (61) bzw. der zweite Teil (62). Da das Stützelement ein großes Gewicht tragen muss, ist Metall das hierfür am besten geeignete Material; damit wird nicht nur für eine bessere Haltekraft zur Bewältigung des Gewichts von Toiletten-Hauptkörper und Benutzer gesorgt. Auch dem Problem, dass der Stützrahmen sich nach längerer Nutzungsdauer leicht verformt, kann hiermit vorgebeugt werden. Dadurch wird dafür gesorgt, dass die gesamte Installation der ersten Seitenplatte (42) und der zweiten Seitenplatte (43) nicht beeinträchtigt wird, auch das ästhetische Erscheinungsbild des ToilettenHauptkörpers (5) lässt sich damit langfristig aufrechterhalten. Bei der Verbindung des ersten Teils (61) bzw. des zweiten Teils (62) mit dem hinteren Teil des ToilettenHauptkörpers (5), der hauptsächlich aus Keramik besteht, wird, da aufgrund der Reibung zwischen dem Metall und dem Keramikmaterial leicht Geräusche auftreten können, auf der Seite, an der der erste Teil (61) bzw. der zweite Teil (62) verbunden wird, eine Schicht Dämpfungsschaum hinzugefügt, um die Geräuschentwicklung zu minimieren.

Zusammenfassend lässt sich sagen, dass am hinteren Ende des ToilettenHauptkörpers (5) ein Metallrahmen hinzugefügt wird, der den Toiletten-Hauptkörper (5) verlängert, und dass dann der elektronische Teil der Toilette auf dem Rahmen befestigt wird. Mittels Aufhängungselement und Befestigungsmutter werden Metallrahmen und Keramik miteinander befestigt, gleichzeitig wird zwischen Metallrahmen und Keramik Dämpfungsschaum hinzugefügt, um den direkten Kontakt zwischen Metallrahmen und Keramik zu verhindern. Die elektronischen Komponenten der smarten Toilette befinden sich oberhalb des Metallrahmens; es ist reichlich Platz vorhanden für das smarte System.

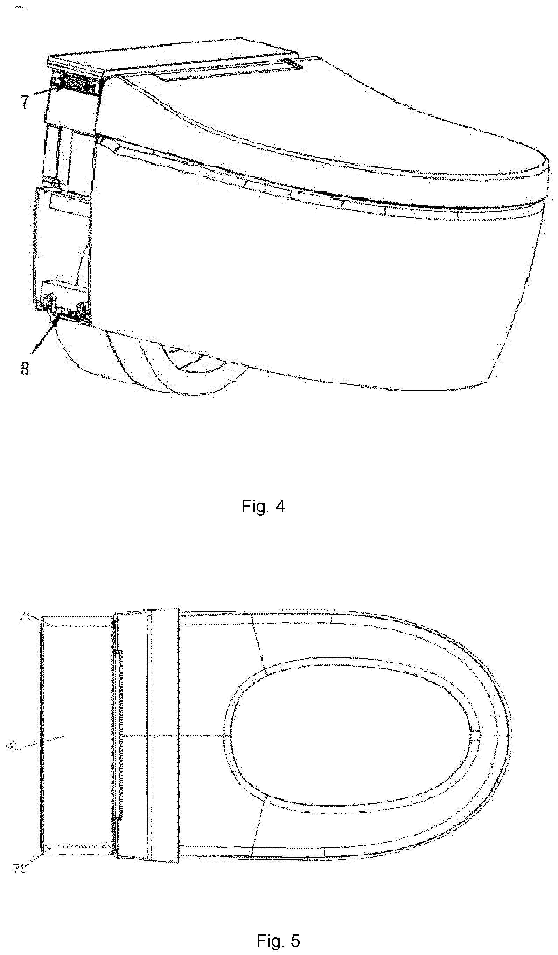

Weiterhin ist, wie in Fig. 4 dargestellt, die obere Abdeckplatte (41) auf beiden Seiten mit einer ersten Einstellvorrichtung (7) versehen, und die erste Seitenplatte (42) und die zweite Seitenplatte (43) sind an der Innenseite der Oberkante mit einem ersten Klemmmechanismus (422) versehen. Die erste Einstellvorrichtung (7) wirkt mit dem ersten Klemmmechanismus (422) zusammen, sodass die Klemmtiefe der ersten Seitenplatte (42) und der zweiten Seitenplatte (43) an der Oberseite eingestellt werden kann. Da bei der Montage der Seitenplatten am Toiletten-Hauptkörper (5) Spalte auftreten können, und zwar weil die Krümmung der Seitenplatten und die Krümmung der Seiten des Toiletten-Hauptkörpers (5) nicht perfekt aufeinander abgestimmt werden können und aufgrund der schwierigen Verarbeitung und infolge ökonomischer Erwägungen, kann es nicht nur dazu kommen, dass Staub in den hinteren Kasten (4) gelangt, der sich nur schwer entfernen lässt; auch das äußere Gesamterscheinungsbild der Toilette kann dadurch leicht beeinträchtigt werden. Bei dieser Ausführungsform ist die erste Einstellvorrichtung (7) mit dem ersten Klemmmechanismus (422) verbunden, wobei die Einstellung der Klemmtiefe ermöglicht wird, sodass die erste Seitenplatte (42) bzw. die zweite Seitenplatte (43) nach der Montage mögliche Spalte ausgleichen können, wodurch die Gesamtästhetik der Toilette verbessert wird.

Weiterhin ist die untere Verbindungsplatte (44) auf beiden Seiten mit einer zweiten Einstellvorrichtung (8) versehen, und auf der Innenseite der Unterkante der ersten Seitenplatte (42) und der zweiten Seitenplatte (43) ist der zweite Klemmmechanismus (423) angebracht. Die zweite Einstellvorrichtung (8) wirkt mit dem zweiten Klemmmechanismus (423) zusammen, sodass die Klemmtiefe der ersten Seitenplatte (42) und der zweiten Seitenplatte (43) an der Unterseite eingestellt werden kann. Die zweite Einstellvorrichtung (8) und der zweite Klemmmechanismus (423) können auf der Grundlage der ersten Einstellvorrichtung (7) und des ersten Klemmmechanismus (422) die Klemmtiefe der Unterseite der ersten Seitenplatte (42) und der zweiten Seitenplatte (43) weiter anpassen, und damit lassen sich mögliche bei der Montage festgestellte Spalte an der Unterseite weiter ausgleichen, wodurch die Gesamtästhetik der Toilette verbessert wird.

Weiterhin umfasst die erste Einstellvorrichtung (7), wie in Fig. 4, Fig. 5 und Fig. 7 dargestellt, die erste Platte (71), den ersten Schraubbolzen (72), den ersten Positionierungsblock (73), die erste Feder (74) und den ersten Einstellblock (75). Die erste Platte (71) ist vertikal unter der oberen Abdeckplatte (41) angeordnet. Der Abstand der Kanten beider Seiten der oberen Abdeckplatte (41) entspricht ungefähr der Länge der ersten Einstellvorrichtung (7). Der erste Positionierungsblock (73) ist mittig an der ersten Platte (71) angebracht und weist zur Außenseite. Die Außenseite ist die Seite, die mit der ersten Seitenplatte (42) bzw. der zweiten Seitenplatte (43) auf Stoß verbunden werden kann. Die ersten Schraubbolzen (72) sind mit der Mittellinie der ersten Platte (71) als Achse symmetrisch an beiden Seiten des ersten Positionierungsblocks (73) angebracht. Am ersten Schraubbolzen (72) ist die erste Schraubbohrung (721) angebracht. Die erste Feder (74) lässt sich auf den ersten Schraubbolzen (72) aufsetzen, und die Länge der ersten Feder ist größer als die Länge des ersten Schraubbolzens (72). In der Mitte des ersten Einstellblocks (75) befindet sich der erste Hohlraum (751), wobei der erste Hohlraum (751) leer ist, um den Positionierungsblock (73) aufnehmen zu können. Der erste Einstellblock (75) ist auf der Rückseite auf beiden Seiten mit einem ersten Schlitz versehen, wobei die Größe des ersten Schlitzes so bemessen ist, dass er die mit dem Schraubbolzen (72) verbundene Feder aufnehmen kann. Der erste Einstellblock (75) ist an der Außenseite mit einer zweiten Schraubbohrung (755) versehen, wobei Größe und Position der zweiten Schraubbohrung (755) der ersten Schraubbohrung (721) entsprechen. Der erste Einstellblock (75) kann über den ersten Schlitz auf die ersten Schraubbolzen (72) aufgesetzt werden. Der erste Positionierungsblock (73) kann in den ersten Hohlraum (751) eingebettet werden. Durch Festdrehen des Einstellblocks (75) mithilfe von Schrauben wird die Verbindung zwischen Seitenplatten und oberer Abdeckplatte (41) hergestellt, und die Montageposition der Seitenplatten lässt sich anhand der Ebenheit mit der Krümmung des Toiletten-Hauptkörpers (5) einstellen.

Weiterhin ist der erste Einstellblock (75) an der Oberseite mit einem L-förmigen elastischen Element (753) versehen, wobei der L-förmige Teil mit der Oberkante des ersten Einstellblocks eine Nut bildet. Das L-förmige elastische Element (753) an der Oberseite ist mit einem trapezförmigen Klemmteil (7531) versehen; das trapezförmige Klemmteil (7531) ist an den ersten Klemmmechanismus angepasst und kann eine Klemmverbindung eingehen. Wenn das erste trapezförmige Klemmteil mit dem ersten Klemmmechanismus verbunden wird, verformt sich das L-förmige elastische Element, damit ein besseres Einrasten gewährleistet ist, wobei die Nut dem L-förmigen elastischen Element Raum gibt für die Verschiebung nach unten. Dadurch wird ein noch besseres Einrasten und somit eine stabilere Installation der Seitenwände gewährleistet.

In dieser Ausführungsform werden die erste Einstellvorrichtung (7) und der erste Klemmmechanismus (422) anhand folgender Schritte und Zusammenhänge montiert: Zunächst wird die erste Feder (74) auf den ersten Schraubbolzen (72) an der Seite der oberen Abdeckung aufgesetzt, dann wird der Einstellblock an der Seite der oberen Abdeckung montiert. Wegen der ersten Feder (74) liegt eine gewisse Beweglichkeit auf dem Einstellblock in Richtung der Achse des Schraubbolzens vor, wobei das Ausmaß der Beweglichkeit durch Änderung der Eindrehtiefe der Schraube eingestellt wird.

Weiterhin ist der erste Einstellblock (75) auf beiden Seiten mit einem Flügel (754) versehen, und die erste Seitenplatte (42) und die zweite Seitenplatte (43) sind auf beiden Seiten mit einem Seitenflansch (421) versehen. Wenn die erste Seitenplatte (42) bzw. die zweite Seitenplatte (43) mit der ersten Einstellvorrichtung (7) montiert wird, können die ersten Flügel (754) mit dem Seitenflansch (421) eine Klemmverbindung eingehen. Bei den ersten Flügeln (754) selbst kommt ebenfalls elastischer Kunststoff zum Einsatz, wodurch ein enges Anliegen an die seitliche Innenwand ermöglicht wird und wodurch die Verschiebung der ersten Seitenplatte (42) bzw. der zweiten Seitenplatte (43) in der axialen Richtung der ersten Feder verringert wird. Somit lässt sich die Montagetiefe der ersten Seitenplatte (42) bzw. der zweiten Seitenplatte (43) genauer kontrollieren, was eine bessere Anpassung an die Seiten des Toiletten-Hauptkörpers ermöglicht.

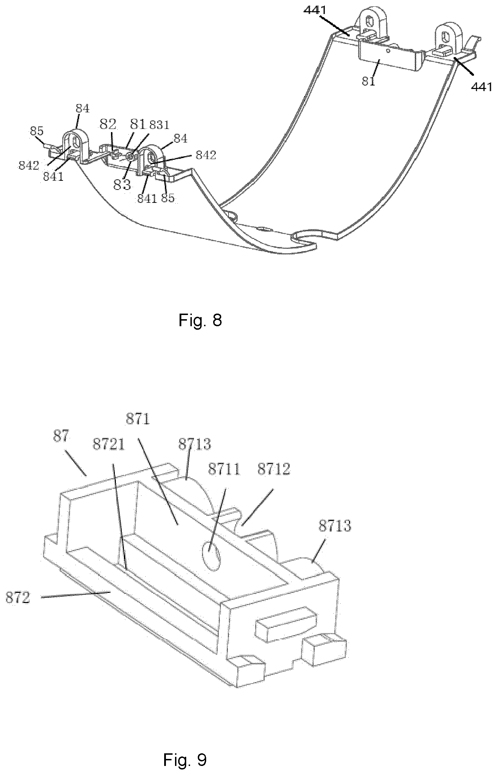

Weiterhin umfasst die zweite Einstellvorrichtung (8), wie in Fig. 4 und Fig. 8 dargestellt, eine zweite Platte (81), einen zweiten Positionierungszylinder (82), einen zweiten Schraubbolzen (83), ein zweites Befestigungselement (84), einen zweiten Flügel (85), eine zweite Feder und einen zweiten Einstellblock (87). Die zweite Platte (81) ist vertikal an den beiden Endkanten der unteren Verbindungsplatte (44) angebracht. Der zweite Schraubbolzen (83) ist in der Mitte der zweiten Platte (81) angebracht und weist zur Außenseite, und am zweiten Schraubbolzen (83) befindet sich die dritte Schraubbohrung (831). Die Außenseite ist die Seite, die mit der ersten Seitenplatte (42) bzw. der zweiten Seitenplatte (43) auf Stoß verbunden werden kann. Der zweite Positionierungszylinder (82) ist jeweils auf einer Seite des zweiten Schraubbolzens (83) angebracht. Die zweite Feder wird auf den zweiten Positionierungszylinder (82) aufgesetzt, wobei die zweite Feder länger ist als der zweite Positionierungszylinder (82). Die Position und die Anzahl der zweiten Positionierungszylinder und der zweiten Schraubbolzen sind natürlich variabel. D. h. die zweiten Schraubbolzen werden in der Mitte der zweiten Platten angebracht und die zweiten Positionierungszylinder werden auf beiden Seiten der zweiten Schraubbolzen angebracht; der Effekt ist aber der gleiche, wie wenn die zweiten Positionierungszylinder in der Mitte und die zweiten Schraubbolzen auf beiden Seiten angebracht werden. Die untere Verbindungsplatte (44) ist auf beiden Seiten mit einem Paar von zweiten Flanschen (441) versehen, die sich auf beiden Seiten horizontal nach außen erstrecken. An den zweiten Flanschen (441) befinden sich die zweiten Befestigungselemente (84), die zu beiden Seiten des Positionierungszylinders (82) angebracht sind. Die zweiten Flügel (85) sind an den zweiten Flanschen (441) angebracht und befinden sich an beiden Seiten an den zweiten Befestigungselementen (84). Die zweiten Flügel (85) können an der Innenwand der ersten Seitenwand bzw. der zweiten Seitenwand anliegen. Die zweiten Flügel kontrollieren die Tiefe der Verschiebung der ersten Seitenplatte bzw. der zweiten Seitenplatte in axialer Richtung der zweiten Feder, wodurch eine bessere Kontrolle der Montagetiefe der ersten Seitenplatte bzw. der zweiten Seitenplatte und eine bessere Anpassung an die Seiten des Toiletten-Hauptkörpers möglich ist.

Weiterhin verfügen die Befestigungselemente (84) an ihrer Oberfläche über eine Durchgangsbohrung, über welche sie mithilfe einer Schraube oder eines Bolzens mit der Seite des Stützrahmens (6) verbunden werden.

Weiterhin umfasst der zweite Einstellblock (87) einen vertikalen Teil (871) und einen horizontalen Teil (872), wobei der vertikale Teil (871) mit dem horizontalen Teil (872) auf seiner Vorderseite eine L-Form bildet. Der vertikale Teil (871) weist in der Mitte eine vierte Schraubbohrung (8711) auf, deren Position und Größe der dritten Schraubbohrung (831) entspricht. Der vertikale Teil (871) weist in der Mitte seiner Rückseite einen zweiten Schlitz (8712) auf, wobei sich auf beiden Seiten des zweiten Schlitzes (8712) an der Rückseite jeweils ein dritter Schlitz (8713) befindet. Der horizontale Teil (872) ist mit einer zweiten Nut (8721) versehen, die in den zweiten Klemmmechanismus (423) eingerastet werden kann. Der zweite Einstellblock (87) wird über den zweiten Schlitz (8712) und den dritten Schlitz (8713) auf den zweiten Schraubbolzen (83) und den zweiten Positionierungszylinder (82) gesetzt. Der zweite Einstellblock (87) wird mit der Schraube festgezogen, um die Verbindung zwischen Seitenplatten und unterer Verbindungsplatte (44) herzustellen, und die Montageposition der Seitenplatte kann anhand der Ebenheit mit der Krümmung der Seite des Toiletten-Hauptkörpers (5) eingestellt werden. In dieser Ausführungsform erfolgt die Montage der zweiten Einstellvorrichtung (8) und des zweiten Klemmmechanismus (423) anhand folgender Schritte und Zusammenhänge: Die untere Verbindungsplatte (44) wird am Stützrahmen (6) montiert. Zunächst wird die zweite Feder auf den Schraubbolzen (83) der unteren Verbindungsplatte (44) gesetzt, danach wird der zweite Einstellblock (87) auf die untere Verbindungsplatte (44) gesetzt. Wegen der Feder liegt eine gewisse Beweglichkeit auf dem zweiten Einstellblock (87) in Richtung der Achse des Schraubbolzens (72) vor, wobei das Ausmaß der Beweglichkeit durch Änderung der Eindrehtiefe der Schraube eingestellt wird.

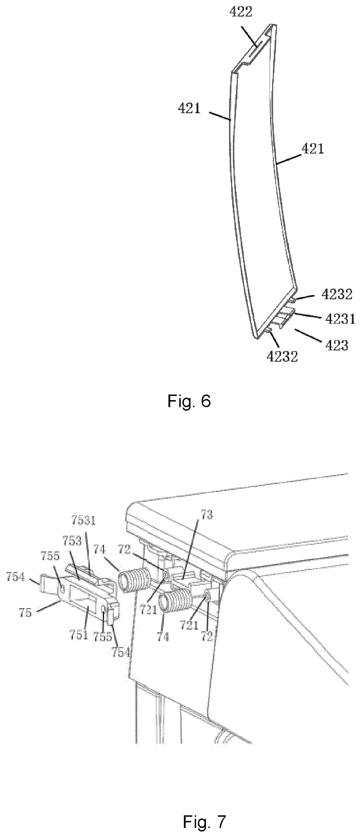

Weiterhin umfasst der zweite Klemmmechanismus (423), wie in Fig. 6 dargestellt, ein drittes Klemmelement (4231) und ein viertes Klemmelement (4232), wobei das vierte Klemmelement (4232) auf beiden Seiten des dritten Klemmelements (4231) angebracht ist und das dritte Klemmelement (4231) sich in die zweite Nut (8721) einbetten lässt. Das vierte Klemmelement (4232) sorgt in Kombination mit dem elastischen Element für ein gegenseitiges Abstützen. Durch die zweischichtige Verbindungsmethode - die Verbindung durch Einbettung des dritten Klemmelements (4231) und durch die Abstützung mit dem vierten Klemmelement (4232) - wird eine stabile und feste Verbindung zwischen der ersten Seitenplatte (42) und der zweiten Seitenplatte (43) mit der unteren Verbindungsplatte (44) gewährleistet.

Weiterhin hat das dritte Klemmelement (4231) die Form eines nach unten gekrümmten L, wobei der nach unten gekrümmte Teil sich in die zweite Nut (8721) einbetten lässt. Durch das Einbetten des nach unten gekrümmten Teils in die Nut (8721) vereinfacht sich die Installation der Seitenplatte; die Seitenplatte und die untere Verbindungsplatte (44) sind für die Installation besser aufeinander abgestimmt.

Weiterhin hat das vierte Klemmelement (4232) eine flache Form, und das zweite Befestigungselement (84) ist an der Unterseite mit einem drehbaren elastischen Element (841) versehen, wobei das elastische Element (841) aufgrund seiner Elastizität auf dem vierten Klemmelement (4232) aufliegt. Dadurch wird die Verbindung zwischen dem vierten Klemmelement (4232) und dem zweiten Befestigungselement (84) stabiler und fällt nicht so leicht ab, wodurch die Stabilität der Installation der Seitenplatte an der unteren Verbindungsplatte (44) verbessert wird.

Zusammenfassend lässt sich sagen, dass der erste Klemmmechanismus (422) am oberen Ende der ersten Seitenplatte (42) bzw. der zweiten Seitenplatte (43) mit der ersten Einstellvorrichtung (7) der oberen Abdeckplatte (41) eine Klemmverbindung eingeht und dass der zweite Klemmmechanismus (423) am unteren Ende der ersten Seitenplatte (42) bzw. der zweiten Seitenplatte (43) mit der zweiten Einstellvorrichtung der unteren Verbindungsplatte (8) eine Klemmverbindung eingeht. Wenn bei der Überprüfung der Passform der Seitenplatte zum ToilettenHauptkörper (5) Defizite festgestellt werden, dann lässt sich die Position der Seitenplatte durch Einstellung der Position von erster Einstellvorrichtung (7) bzw. zweiter Einstellvorrichtung (8) anpassen, sodass die Teile definitiv nicht mehr am Toiletten-Hauptkörper (5) hervorstehen und damit der Toiletten-Hauptkörper dauerhaft ein glattes und ästhetisch ansprechendes Gesamterscheinungsbild erhält. Wie in Fig. 3 dargestellt ist der nach unten gebogene Abschnitt der Außenkante des Sitzdeckels (1) die seitliche Abdeckung (11), wobei, wenn der Sitzdeckel (1) in geschlossener Position ist, die seitliche Abdeckung (11) den ersten Gehäuseteil (322) und die Sitzbrille (2) abdeckt. Wenn die seitliche Abdeckung (11) unter dem Sitzdeckel (1) den ersten Gehäuseteil (322) und die Sitzbrille (2) komplett abgedeckt hat, wird das Eindringen von Staub und Schmutz in das Gehäuse (32) während der Nichtbenutzung verhindert.

Fachleuten auf diesem technischen Gebiet werden nach der Durchsicht dieser Erläuterung und der praktischen Umsetzung der hier offenbarten Erfindung natürlich noch weitere Ausführungsformen zu dieser Erfindung einfallen.

Die Beschreibung und die Anwendungsbeispiele sollen lediglich exemplarischen Charakter haben; der tatsächliche Umfang und zentrale Inhalt dieser Erfindung werden mittels der folgenden Ansprüche aufgezeigt.

Es ist darauf hinzuweisen, dass diese Erfindung nicht auf die oben beschriebene und in den beigefügten Zeichnungen dargestellte konkrete Struktur beschränkt ist und dass innerhalb der Erfindung verschiedene Verbesserungen und Änderungen vorgenommen werden können.

## Patentansprüche

1. Wandhängende Toilette, umfassend:
einen Sitzdeckel (1), eine Sitzbrille (2), eine smarte Vorrichtung (3), einen hinteren Kasten (4), einen Toiletten-Hauptkörper (5);
wobei die smarte Vorrichtung (3) ein smartes System und ein Gehäuse (32) umfasst, das das smarte System abdeckt;
wobei das Gehäuse (32) einen ersten Gehäuseteil (321) und einen zweiten Gehäuseteil (322) umfasst; der zweite Gehäuseteil (322) im hinteren Kasten (4) angebracht ist und der hintere Kasten (4) hinter dem ToilettenHauptkörper (5) angeordnet und mit dem hinteren Teil des ToilettenHauptkörpers (5) verbunden ist;
wobei sich im hinteren Kasten (4) auch ein Stützrahmen (6) befindet, mit welchem der Toiletten-Hauptkörper (5) und der zweite Gehäuseteil (322) gestützt werden;
wobei der erste Gehäuseteil (321) auf dem Toilettenhauptkörper (5) angebracht ist und der Sitzdeckel (1) koaxial mit der Sitzbrille (2) auf dem ersten Gehäuseteil (321) schwenkbar montiert ist.

2. Wandhängende Toilette gemäß Anspruch 1, **dadurch gekennzeichnet, dass** der hintere Kasten (4) eine obere Abdeckplatte (41), eine erste Seitenplatte (42), eine zweite Seitenplatte (43) und eine untere Verbindungsplatte (44) umfasst, wobei die erste Seitenplatte (42) und die zweite Seitenplatte (43) auf beiden Seiten trennbar mit der oberen Abdeckplatte (41) und der unteren Verbindungsplatte (44) verbunden sind, sodass ein umfassender Rahmen gebildet wird.

3. Wandhängende Toilette gemäß Anspruch 2, **dadurch gekennzeichnet, dass** es sich bei der ersten Seitenplatte (42) und der zweiten Seitenplatte (43) um gekrümmte Platten handelt, deren Krümmung an die Krümmung der Seiten des Toilettenhauptkörpers (5) angenähert ist, wobei, wenn die erste Seitenplatte (42) bzw. die zweite Seitenplatte (43) mit dem hinteren Teil des Toiletten-Hauptkörpers (5) verbunden worden ist, der Übergang zwischen der Seitenplatte und der Seite des Toiletten-Hauptkörpers (5) von vorne nach hinten glatt und eben ist.

4. Wandhängende Toilette gemäß einem der vorstehenden Ansprüche, **dadurch gekennzeichnet, dass** der Stützrahmen (6) einen ersten Teil (61), einen zweiten Teil (62), einen dritten Teil (63) umfasst, der erste Teil (61) und der zweite Teil (62) parallel zueinander angebracht sind, der dritte Teil (63) dazwischen befestigt ist, der zweite Gehäuseteil (322) auf dem ersten Teil (61) und dem zweiten Teil (62) angebracht ist, der zweite Teil (62) zur Verbindung mit dem Toilettenhauptkörper (5) dient und der erste Teil (61) zur Verbindung mit der Wand dient.

5. Wandhängende Toilette gemäß Anspruch 4, **dadurch gekennzeichnet, dass** der erste Teil (61) und der zweite Teil (62) die gleiche Form haben und von vorne nach hinten symmetrisch angeordnet sind und dass sich im Zwischenbereich zwischen dem ersten Teil (61) und dem zweiten Teil (62) eine Durchgangsbohrung (64) für die Durchführung einer Leitung für die Wasserzufuhr befindet, wobei der auf der Seite des Toiletten-Hauptkörpers (5) befindliche Teil des Stützrahmens (6) mit einer ersten Montagebohrung (66) für den Durchgang eines Aufhängungselements versehen und der auf der Seite der Wand befindliche Teil des Stützrahmens (6) mit einer zweiten Montagebohrung (65) versehen ist und wobei der Durchmesser der ersten Montagebohrung (66) mindestens gleich groß ist wie der Durchmesser der zweiten Montagebohrung (65), vorzugsweise größer ist als dieser.

6. Wandhängende Toilette gemäß Anspruch 4 oder 5, **dadurch gekennzeichnet, dass** der Stützrahmen (6) aus Metall besteht, die Länge gleich groß ist wie die Länge des zweiten Gehäuseteils (322), vorzugsweise größer ist als diese, und an der Außenseite des ersten Teils (61) bzw. des zweiten Teils (62) eine Schicht Dämpfungsschaum vorgesehen ist, wobei der Dämpfungsschaum die gleiche Form hat wie der erste Teil (61) bzw. der zweite Teil (62).

7. Wandhängende Toilette gemäß Anspruch 2, optional in Verbindung mit einem weiteren der vorstehenden Ansprüche, **dadurch gekennzeichnet, dass** die obere Abdeckplatte (41) auf beiden Seiten mit einer ersten Einstellvorrichtung (7) versehen ist und dass auf der Innenseite der Oberkante der ersten Seitenplatte (42) und der zweiten Seitenplatte (43) ein erster Klemmmechanismus (422) angebracht ist, wobei die erste Einstellvorrichtung (7) und der erste Klemmmechanismus (422) so zusammenwirken, dass die Klemmtiefe der ersten Seitenplatte (42) und der zweiten Seitenplatte (43) auf der Oberseite einstellbar ist.

8. Wandhängende Toilette gemäß Anspruch 2, optional in Verbindung mit einem weiteren der vorstehenden Ansprüche, die sich dadurch auszeichnet, dass die untere Verbindungsplatte (44) auf beiden Seiten mit einer zweiten Einstellvorrichtung (8) versehen ist und dass auf der Innenseite der Unterkante der ersten Seitenplatte (42) und der zweiten Seitenplatte (43) ein zweiter Klemmmechanismus (423) angebracht ist, wobei die zweite Einstellvorrichtung (8) und der zweite Klemmmechanismus (423) so zusammenwirken, dass die Klemmtiefe der ersten Seitenplatte (42) und der zweiten Seitenplatte (43) auf der Unterseite einstellbar ist.

9. Wandhängende Toilette gemäß Anspruch 7, optional in Verbindung mit Anspruch 8, **dadurch gekennzeichnet, dass** die erste Einstellvorrichtung (7) eine erste Platte (71), erste Schraubbolzen (72), einen ersten Positionierungsblock (73), eine erste Feder (74) und einen ersten Einstellblock (75) umfasst, wobei die erste Platte (71) vertikal unter der oberen Abdeckplatte (41) angebracht ist, der Abstand der Kanten beider Seiten der oberen Abdeckplatte ungefähr der Länge der ersten Einstellvorrichtung (7) entspricht, der erste Positionierungsblock (73) mittig an der ersten Platte (71) angebracht ist und zur Außenseite weist, die Außenseite die Seite ist, die mit der ersten Seitenplatte (42) bzw. der zweiten Seitenplatte (43) auf Stoß verbunden werden kann, die ersten Schraubbolzen (72) mit der Mittellinie der ersten Platte (71) als Achse symmetrisch an beiden Seiten des ersten Positionierungsblocks (73) angebracht sind, die ersten Schraubbolzen (72) mit der ersten Schraubbohrung (721) versehen sind, die erste Feder (74) sich auf den ersten Schraubbolzen (72) aufsetzen lässt und die Länge der ersten Feder (74) größer ist als die Länge des ersten Schraubbolzens (72), während sich in der Mitte des ersten Einstellblocks (75) der erste Hohlraum (751) befindet, wobei der erste Hohlraum (751) leer ist, um den Positionierungsblock aufnehmen zu können, der erste Einstellblock (75) auf der Rückseite auf beiden Seiten mit einem ersten Schlitz versehen ist, wobei die Größe des ersten Schlitzes so bemessen ist, dass er die mit dem Schraubbolzen verbundene Feder aufnehmen kann, der erste Einstellblock (75) an der Außenseite mit einer zweiten Schraubbohrung (755) versehen ist, wobei Größe und Position der zweiten Schraubbohrung (755) der ersten Schraubbohrung (721) entsprechen, der erste Einstellblock (75) über den ersten Schlitz auf die ersten Schraubbolzen (72) aufgesetzt werden kann, der erste Positionierungsblock (73) in den ersten Hohlraum (751) eingebettet werden kann, durch Festdrehen des Einstellblocks mithilfe von Schrauben die Verbindung zwischen Seitenplatte (42, 43) und oberer Abdeckplatte (41 hergestellt wird und die Montageposition der Seitenplatte sich anhand der Ebenheit mit der Krümmung des Toiletten-Hauptkörpers (5) einstellen lässt.

10. Wandhängende Toilette gemäß Anspruch 9, **dadurch gekennzeichnet, dass** der erste Einstellblock (75) an der Oberseite mit einem L-förmigen elastischen Element (753) versehen ist, wobei der L-förmige Teil mit der Oberkante des ersten Einstellblocks (75) eine Nut bildet, dass das L-förmige elastische Element (753) an der Oberseite mit einem trapezförmigen Klemmteil (7531) versehen ist und dass das trapezförmige Klemmteil (7531) an den ersten Klemmmechanismus (422) angepasst ist und eine Klemmverbindung eingehen kann.

11. Wandhängende Toilette gemäß Anspruch 9 oder 10, **dadurch gekennzeichnet, dass** der erste Einstellblock (75) auf beiden Seiten mit einem ersten Flügel (754) versehen ist und dass die erste Seitenplatte (42) und die zweite Seitenplatte (43) auf beiden Seiten mit einem Seitenflansch (421) versehen sind, wobei die ersten Flügel (754), wenn die erste Seitenplatte (42) bzw. die zweite Seitenplatte (43) mit der ersten Einstellvorrichtung (7) montiert wird, an der Innenwand der ersten Seitenplatte (42) bzw. der zweiten Seitenplatte (43) anliegen können.

12. Wandhängende Toilette gemäß Anspruch 8, optional in Verbindung mit einem weiteren der vorstehenden Ansprüche, **dadurch gekennzeichnet, dass** die zweite Einstellvorrichtung (8) eine zweite Platte (81), einen zweiten Positionierungszylinder, einen zweiten Schraubbolzen (83), ein zweites Befestigungselement (84), einen zweiten Flügel (85), eine zweite Feder und einen zweiten Einstellblock (87) umfasst, wobei die zweite Platte (81) vertikal an den beiden Kanten am Ende der unteren Verbindungsplatte (44) angebracht ist, der zweite Schraubbolzen (83) in der Mitte der zweiten Platte (81) angebracht ist und zur Außenseite weist, sich die dritte Schraubbohrung (831) am zweiten Schraubbolzen befindet, die Außenseite die Seite ist, die mit der ersten Seitenplatte (42) bzw. der zweiten Seitenplatte (43) auf Stoß verbunden werden kann, der zweite Positionierungszylinder an beiden Seiten am zweiten Schraubbolzen (83) angebracht ist, die zweite Feder auf dem zweiten Positionierungszylinder angebracht ist, wobei die zweite Feder länger ist als der zweite Positionierungszylinder, die untere Verbindungsplatte (44) auf beiden Seiten mit einem Paar von zweiten Flanschen (441) versehen ist, die sich auf beiden Seiten horizontal nach außen erstrecken, an den zweiten Flanschen (441) sich die zweiten Befestigungselemente (84) befinden, die zu beiden Seiten des Positionierungszylinders angebracht sind, die zweiten Flügel (85) an den zweiten Flanschen (441) angebracht sind und sich an den beiden Seiten der zweiten Befestigungselemente (84) befinden und die zweiten Flügel (85) dann an der Innenwand der ersten Seitenplatte (42) bzw. der zweiten Seitenplatte (43) anliegen.

13. Wandhängende Toilette gemäß Anspruch 12, **dadurch gekennzeichnet, dass** der zweite Einstellblock (87) einen vertikalen Teil (872) und einen horizontalen Teil (871) umfasst, wobei der vertikale Teil (872) mit dem horizontalen Teil (871) auf seiner Vorderseite eine L-Form bildet, der vertikale Teil (872) in der Mitte eine vierte Schraubbohrung (8711) aufweist, deren Position und Größe der dritten Schraubbohrung (831) entspricht, der vertikale Teil (872) in der Mitte seiner Rückseite einen zweiten Schlitz (8712) aufweist, wobei sich auf beiden Seiten des zweiten Schlitzes (8712) an der Rückseite ein dritter Schlitz (8713) befindet, der horizontale Teil (871) mit einer zweiten Nut (8721) versehen ist, wobei die zweite Nut (8721) in den zweiten Klemmmechanismus (423) eingerastet werden kann, der zweite Einstellblock (87) über den zweiten Schlitz (8712) und den dritten Schlitz (8713) auf den zweiten Schraubbolzen (83) und den zweiten Positionierungszylinder gesetzt wird, der zweite Einstellblock (87) mit der Schraube festgezogen wird, um die Verbindung zwischen Seitenplatte (42, 43) und unterer Verbindungsplatte (44) herzustellen, und die Montageposition der Seitenplatte (42, 43) anhand der Ebenheit mit der Krümmung des Toiletten-Hauptkörpers (5) eingestellt werden kann.

14. Wandhängende Toilette gemäß Anspruch 8, optional in Verbindung mit einem weiteren der vorstehenden Ansprüche, **dadurch gekennzeichnet, dass** der zweite Klemmmechanismus (423) ein drittes Klemmelement (4231) und ein viertes Klemmelement (4232) umfasst, wobei auf beiden Seiten des dritten Klemmelements (4231) jeweils ein viertes Klemmelement (4232) angebracht ist, wobei vorzugsweise das dritte Klemmelement (4231) die Form eines nach unten gekrümmten L hat, wobei der nach unten gekrümmte Teil sich in die zweite Nut (8721) einbetten lässt, und vorzugsweise das vierte Klemmelement (4232) eine flache Form hat und dass das zweite Befestigungselement (84) an der Unterseite mit einem drehbaren elastischen Element (841) versehen ist, wobei das elastische Element (841) aufgrund seiner Elastizität oben am vierten Klemmelement (4232) anliegt.

15. Wandhängende Toilette gemäß einem der vorstehenden Ansprüche, **dadurch gekennzeichnet, dass** ein nach unten gebogener Abschnitt einer Außenkante des Sitzdeckels (1) eine seitliche Abdeckung (11) ist, wobei, wenn der Sitzdeckel (1) in geschlossener Position ist, die seitliche Abdeckung (11) das erste Gehäuseteil (321) und die Sitzbrille (2) abdeckt.

## Claims

1. Wall-hung toilet, comprising: a seat lid (1), a toilet seat (2), a smart device (3), a rear box (4), a toilet main body (5);
wherein the smart device (3) comprises a smart system and a housing (32) covering the smart system;
wherein the housing (32) comprises a first housing part (321) and a second housing part (322); the second housing part (322) is mounted in the rear box (4), and the rear box (4) is arranged behind the toilet main body (5) and connected to the rear part of the toilet main body (5);
wherein in the rear box (4) there also is a support frame (6) with which the toilet main body (5) and the second housing part (322) are supported;
wherein the first housing part (321) is mounted on the toilet main body (5), and the seat lid (1) is pivotally mounted on the first housing part (321) coaxially with the toilet seat (2).

2. Wall-hung toilet according to claim 1, **characterized in that** the rear box (4) comprises an upper cover plate (41), a first side plate (42), a second side plate (43) and a lower connecting plate (44), wherein the first side plate (42) and the second side plate (43) are separably connected on both sides to the upper cover plate (41) and the lower connecting plate (44), so as to form a surrounding frame.

3. Wall-hung toilet according to claim 2, **characterized in that** the first side plate (42) and the second side plate (43) are curved plates whose curvature is approximated to the curvature of the sides of the toilet main body (5), wherein when the first side plate (42) and the second side plate (43), respectively, have been connected to the rear part of the toilet main body (5), the transition between the side plate and the side of the toilet main body (5) is smooth and plane from front to rear.

4. Wall-hung toilet according to any one of the preceding claims, **characterized in that** the support frame (6) comprises a first part (61), a second part (62), a third part (63), the first part (61) and the second part (62) are mounted parallel to each other, the third part (63) is fixed therebetween, the second housing part (322) is mounted on the first part (61) and the second part (62), the second part (62) is for connection to the toilet main body (5), and the first part (61) is for connection to the wall.

5. Wall-hung toilet according to claim 4, **characterized in that** the first part (61) and the second part (62) have the same shape and are arranged symmetrically from front to rear, and **in that** in the intermediate region between the first part (61) and the second part (62) there is a through-hole (64) for the lead-through of a line for the water supply, wherein the part of the support frame (6) located on the side of the toilet main body (5) is provided with a first mounting hole (66) for the passage of a suspension element, and the part of the support frame (6) located on the side of the wall is provided with a second mounting hole (65), and wherein the diameter of the first mounting hole (66) is at least equal to, preferably larger than, the diameter of the second mounting hole (65).

6. Wall-hung toilet according to claim 4 or 5, **characterized in that** the support frame (6) is made of metal, the length is equal to, preferably larger than, the length of the second housing part (322), and on the outside of the first part (61) and the second part (62), respectively, a layer of damping foam is provided, wherein the damping foam has the same shape as the first part (61) and the second part (62), respectively.

7. Wall-hung toilet according to claim 2, optionally in connection with a further one of the preceding claims, **characterized in that** the upper cover plate (41) is provided on both sides with a first adjustment device (7), and **in that** on the inner side of the upper edge of the first side plate (42) and the second side plate (43) a first clamping mechanism (422) is mounted, wherein the first adjustment device (7) and the first clamping mechanism (422) cooperate such that the clamping depth of the first side plate (42) and the second side plate (43) on the upper side are adjustable.

8. Wall-hung toilet according to claim 2, optionally in connection with a further one of the preceding claims, **characterized in that** the lower connecting plate (44) is provided on both sides with a second adjustment device (8), and **in that** on the inner side of the lower edge of the first side plate (42) and the second side plate (43) a second clamping mechanism (423) is mounted, wherein the second adjustment device (8) and the second clamping mechanism (423) cooperate such that the clamping depth of the first side plate (42) and the second side plate (43) on the lower side are adjustable.

9. Wall-hung toilet according to claim 7, optionally in connection with claim 8, **characterized in that** the first adjustment device (7) comprises a first plate (71), first screw bolts (72), a first positioning block (73), a first spring (74) and a first adjustment block (75), wherein the first plate (71) is mounted vertically below the upper cover plate (41), the distance of the edges of both sides of the upper cover plate approximately corresponds to the length of the first adjustment device (7), the first positioning block (73) is mounted centrally on the first plate (71) and faces the outside, the outside is the side which can be flushly connected to the first side plate (42) and the second side plate (43), respectively, the first screw bolts (72) are mounted symmetrically with the center line of the first plate (71) as axis on both sides of the first positioning block (73), the first screw bolts (72) are provided with a first screw hole (721), the first spring (74) can be fitted on the first screw bolt (72), and the length of the first spring (74) is larger than the length of the first screw bolt (72), while a first cavity (751) is located in the center of the first adjustment block (75), wherein the first cavity (751) is empty to be able to receive the positioning block, the first adjustment block (75) is provided on the rear side on both sides with a first slot, wherein the size of the first slot is dimensioned such that it can receive the spring connected to the screw bolt, the first adjustment block (75) is provided on the outside with a second screw hole (755), wherein the size and position of the second screw hole (755) correspond to the first screw hole (721), the first adjustment block (75) can be fitted on the first screw bolts (72) via the first slot, the first positioning block (73) can be embedded in the first cavity (751), by tightening the adjustment block by means of screws the connection between the side plate (42, 43) and the upper cover plate (41) is established, and the mounting position of the side plate can be adjusted by means of the flatness with the curvature of the toilet main body (5).

10. Wall-hung toilet according to claim 9, **characterized in that** the first adjustment block (75) is provided on the upper side with an L-shaped elastic element (753), wherein the L-shaped part forms a groove with the upper edge of the first adjustment block (75), **in that** the L-shaped elastic element (753) is provided on the upper side with a trapezoidal clamping part (7531), and **in that** the trapezoidal clamping part (7531) is adapted to the first clamping mechanism (422) and can form a clamping connection.

11. Wall-hung toilet according to claim 9 or 10, **characterized in that** the first adjustment block (75) is provided on both sides with a first wing (754), and **in that** the first side plate (42) and the second side plate (43) are provided on both sides with a side flange (421), wherein when the first side plate (42) and the second side plate (43), respectively, are mounted with the first adjustment device (7), the first wings (754) can abut on the inner wall of the first side plate (42) and the second side plate (43), respectively.

12. Wall-hung toilet according to claim 8, optionally in connection with a further one of the preceding claims, **characterized in that** the second adjustment device (8) comprises a second plate (81), a second positioning cylinder, a second screw bolt (83), a second fastening element (84), a second wing (85), a second spring, and a second adjustment block (87), wherein the second plate (81) is mounted vertically on both edges at the end of the lower connecting plate (44), the second screw bolt (83) is mounted in the middle of the second plate (81) and faces towards the outside, a third screw hole (831) is located on the second screw bolt, the outside is the side which can be flushly connected to the first side plate (42) and the second side plate (43), respectively, the second positioning cylinder is mounted on both sides on the second screw bolt (83), the second spring is mounted on the second positioning cylinder, wherein the second spring is longer than the second positioning cylinder, the lower connecting plate (44) is provided on both sides with a pair of second flanges (441) which extend horizontally outwards on both sides, on the second flanges (441) are located the second fastening elements (84) which are mounted on both sides of the positioning cylinder, the second wings (85) are mounted on the second flanges (441) and are located on both sides of the second fastening elements (84), and the second wings (85) then abut on the inner wall of the first side plate (42) and the second side plate (43), respectively.

13. Wall-hung toilet according to claim 12, **characterized in that** the second adjustment block (87) comprises a vertical part (872) and a horizontal part (871), wherein the vertical part (872) forms an L-shape with the horizontal part (871) on its front side, the vertical part (872) has in the middle a fourth screw hole (8711), the position and size of which corresponds to the third screw hole (831), the vertical part (872) has in the middle of its rear side a second slot (8712), wherein on both sides of the second slot (8712) on the rear side is located a third slot (8713), the horizontal part (871) is provided with a second groove (8721), wherein the second groove (8721) can be snapped into the second clamping mechanism (423), the second adjustment block (87) is set on the second screw bolt (83) and the second positioning cylinder via the second slot (8712) and the third slot (8713), the second adjustment block (87) is tightened with the screw to establish the connection between the side plate (42, 43) and the lower connecting plate (44), and the mounting position of the side plate (42, 43) can be adjusted by means of the flatness with the curvature of the toilet main body (5).

14. Wall-hung toilet according to claim 8, optionally in connection with a further one of the preceding claims, **characterized in that** the second clamping mechanism (423) comprises a third clamping element (4231) and a fourth clamping element (4232), wherein on both sides of the third clamping element (4231) is respectively mounted a fourth clamping element (4232), wherein preferably the third clamping element (4231) has the shape of a downwardly curved L, wherein the downwardly curved part can be embedded in the second groove (8721), and preferably the fourth clamping element (4232) has a flat shape, and **in that** the second fastening element (84) is provided on the lower side with a rotatable elastic element (841), wherein due to its elasticity the elastic element (841) abuts on the top of the fourth clamping element (4232).

15. Wall-hung toilet according to any one of the preceding claims, **characterized in that** a downwardly bent portion of an outer edge of the seat lid (1) is a side cover (11), wherein when the seat lid (1) is in the closed position, the side cover (11) covers the first housing part (321) and the toilet seat (2).

## Revendications

1. Toilettes suspendues comprenant un couvercle d'abattant (1), une lunette d'abattant (2), un dispositif intelligent (3), un caisson arrière (4), un corps principal de toilettes (5) ;
le dispositif intelligent (3) comprenant un système intelligent et un boîtier (32) recouvrant le système intelligent ;
ledit boîtier (32) comprenant une première partie de boîtier (321) et une deuxième partie de boîtier (322) ; la deuxième partie de boîtier (322) étant montée dans le caisson arrière (4), et le caisson arrière (4) étant disposé derrière le corps principal de toilettes (5) et raccordé à la partie arrière du corps principal de toilettes (5) ;
un bâti support (6) se trouvant également dans le caisson arrière (4) et servant à supporter le corps principal de toilettes (5) et la deuxième partie de boîtier (322) ;
la première partie de boîtier (321) étant montée sur le corps principal de toilettes (5) et le couvercle d'abattant (1) étant monté pivotant sur la première partie de boîtier (321) de manière coaxiale avec la lunette d'abattant (2).

2. Toilettes suspendues selon la revendication 1, **caractérisées en ce que** le caisson arrière (4) comprend une plaque supérieure de recouvrement (41), une première plaque latérale (42), une deuxième plaque latérale (43) et une plaque inférieure de raccordement (44) ; ladite première plaque latérale (42) et ladite deuxième plaque latérale (43) étant reliées des deux côtés, de manière séparable, à la plaque supérieure de recouvrement (41) et à la plaque inférieure de raccordement (44), formant ainsi un cadre complet.

3. Toilettes suspendues selon la revendication 2, **caractérisées en ce que** la première plaque latérale (42) et la deuxième plaque latérale (43) sont des plaques courbes dont la courbure est proche de la courbure des côtés du corps principal de toilette (5) ; la transition entre la plaque latérale et le côté du corps principal de toilettes (5) étant lisse et plane d'avant en arrière une fois que la première plaque latérale (42) et la deuxième plaque latérale (43) ont été raccordées à la partie arrière du corps principal de toilettes (5).

4. Toilettes suspendues selon l'une des revendications précédentes, **caractérisées en ce que** le bâti support (6) comprend une première partie (61), une deuxième partie (62) et une troisième partie (63) ; la première partie (61) et la deuxième partie (62) sont montées parallèlement l'une à l'autre, la troisième partie (63) est fixée entre elles, la deuxième partie de boîtier (322) est montée sur la première partie (61) et la deuxième partie (62) ; la deuxième partie (62) sert au raccordement avec le corps principal de toilettes (5) et la première partie (61) sert au raccordement mural.

5. Toilettes suspendues selon la revendication 4, **caractérisées en ce que** la première partie (61) et la deuxième partie (62) ont la même forme et sont disposées symétriquement d'avant en arrière et **en ce qu'**il se trouve, dans la zone intermédiaire entre la première partie (61) et la deuxième partie (62), un trou traversant (64) pour le passage d'une conduite d'alimentation en eau ; la partie du bâti support (6) située côté corps principal de toilettes (5) étant pourvu d'un premier trou de montage (66) pour le passage d'un élément de suspension et la partie du bâti support (6) située côté mur présentant un deuxième trou de montage (65), et le diamètre du premier trou de montage (66) ayant au moins la même taille que le diamètre du deuxième trou de montage (65), en étant de préférence plus grand que celui-ci.

6. Toilettes suspendues selon la revendication 4 ou 5, **caractérisées en ce que** le bâti support (6) est en métal, sa longueur est égale à celle de la deuxième partie de boîtier (322), en étant de préférence supérieure à celle-ci, et une couche de mousse amortissante est prévue sur l'extérieur de la première partie (61) ou de la deuxième partie (62), ladite mousse amortissante ayant la même forme que la première partie (61) ou la deuxième partie (62).

7. Toilettes suspendues selon la revendication 2, éventuellement en lien avec une autre des revendications précédentes, **caractérisées en ce que** la plaque supérieure de recouvrement (41) est pourvue, des deux côtés, d'un premier dispositif de réglage (7) et **en ce qu'**un premier mécanisme de serrage (422) est monté sur l'intérieur du bord supérieur de la première plaque latérale (42) et de la deuxième plaque latérale (43) ; le premier dispositif de réglage (7) et le premier mécanisme de serrage (422) interagissant de façon à permettre le réglage de la profondeur de serrage de la première plaque latérale (42) et de la deuxième plaque latérale (43) sur le dessus.

8. Toilettes suspendues selon la revendication 2, éventuellement en lien avec une autre des revendications précédentes, lesquelles se caractérisent par le fait que la plaque inférieure de raccordement (44) est pourvue, des deux côtés, d'un deuxième dispositif de réglage (8) et par le fait qu'un deuxième mécanisme de serrage (423) est monté sur l'intérieur du bord inférieur de la première plaque latérale (42) et de la deuxième plaque latérale (43), le deuxième dispositif de réglage (8) et le deuxième mécanisme de serrage (423) interagissant de façon à permettre le réglage de la profondeur de serrage de la première plaque latérale (42) et de la deuxième plaque latérale (43) sur le dessous.

9. Toilettes suspendues selon la revendication 7, éventuellement en lien avec la revendication 8, **caractérisées en ce que** le premier dispositif de réglage (7) comprend une première plaque (71), des premiers boulons à vis (72), un premier bloc de positionnement (73), un premier ressort (74) et un premier bloc de réglage (75) ; ladite première plaque (71) étant montée verticalement sous la plaque supérieure de recouvrement (41), l'écart entre les bords des deux côtés de la plaque supérieure de recouvrement correspondant approximativement à la longueur du premier dispositif de réglage (7), le premier bloc de positionnement (73) étant monté au milieu de la première plaque (71) et étant tourné vers l'extérieur, l'extérieur étant le côté pouvant être assemblé à plat-joint avec la première plaque latérale (42) ou la deuxième plaque latérale (43), les premiers boulons à vis (72) étant montés symétriquement de part et d'autre du premier bloc de positionnement (73), la ligne médiane de la première plaque (71) servant d'axe de symétrie, les premiers boulons à vis (72) étant pourvus des premiers trous taraudés (721), le premier ressort (74) pouvant être installé sur le premier boulon à vis (72) et la longueur du premier ressort (74) étant supérieure à celle du premier boulon à vis (72), tandis qu'au milieu du premier bloc de réglage (75) il se trouve la première cavité (751), ladite première cavité (751) étant vide pour pouvoir accueillir le bloc de positionnement, ledit premier bloc de réglage (75) étant pourvu, au dos, d'une première fente des deux côtés, la taille de ladite première fente étant telle qu'elle est apte à recevoir le ressort raccordé au boulon à vis, le premier bloc de réglage (75) étant pourvu, sur l'extérieur, d'un deuxième trou taraudé (755), lequel deuxième trou taraudé (755) présentant une taille et une position correspondent à celles du premier trou taraudé (721), ledit premier bloc de réglage (75) pouvant être installé, par le biais de la première fente, sur les premiers boulons de vis (72), ledit premier bloc de positionnement (73) pouvant être encastré dans la première cavité (751), le raccordement entre la plaque latérale (42, 43) et la plaque supérieure de recouvrement (41) étant réalisé par fixation du bloc de réglage à l'aide de vis, et la position de montage de la plaque latérale pouvant être réglée en se fondant sur la planéité avec la courbure du corps principal de toilettes (5).

10. Toilettes suspendues selon la revendication 9, **caractérisées en ce que** le premier bloc de réglage (75) est pourvu, sur le dessus, d'un élément élastique en forme de L (753), la partie en forme de L formant une rainure avec le bord supérieur du premier bloc de réglage (75), **en ce que** l'élément élastique en forme de L (753) est pourvu, sur le dessus, d'une partie de serrage trapézoïdale (7531) et **en ce que** la partie de serrage trapézoïdale (7531) est adaptée au premier mécanisme de serrage (422) et peut subir une liaison par serrage.

11. Toilettes suspendues selon la revendication 9 ou 10, **caractérisées en ce que** le premier bloc de réglage (75) est pourvu, des deux côtés, d'une première aile (754) et **en ce que** la première plaque latérale (42) et la deuxième plaque latérale (43) sont pourvues, des deux côtés, d'une bride latérale (421), lesdites premières ailes (754) pouvant reposer contre la paroi intérieure de la première plaque latérale (42) ou de la deuxième plaque latérale (43) lorsque la première plaque latérale (42) ou la deuxième plaque latérale (43) est montée sur le premier dispositif de réglage (7).

12. Toilettes suspendues selon la revendication 8, éventuellement en lien avec une autre des revendications précédentes, **caractérisées en ce que** le deuxième dispositif de réglage (8) comprend une deuxième plaque (81), un deuxième cylindre de positionnement, un deuxième boulon à vis (83), un deuxième élément de fixation (84), une deuxième aile (85), un deuxième ressort et un deuxième bloc de réglage (87) ; ladite deuxième plaque (81) étant montée verticalement sur les deux bords à l'extrémité de la plaque inférieure de raccordement (44), le deuxième boulon à vis (83) étant monté au milieu de la deuxième plaque (81) et étant tourné vers l'extérieur, le troisième trou de vis (831) se trouvant sur le deuxième boulon à vis, l'extérieur étant le côté pouvant être assemblé à plat-joint avec la première plaque latérale (42) ou la deuxième plaque latérale (43), le deuxième cylindre de positionnement étant monté des deux côtés sur le deuxième boulon à vis (83), le deuxième ressort étant monté sur le deuxième cylindre de positionnement, le deuxième le ressort étant plus long que le deuxième cylindre de positionnement, la plaque inférieure de raccordement (44) étant pourvue, des deux côtés, d'une paire de deuxièmes brides (441) qui s'étendent, des deux côtés, horizontalement vers l'extérieur, les deuxièmes éléments de fixation (84) se trouvant sur les deuxièmes brides (441) et étant montés de part et d'autre du cylindre de positionnement, les deuxièmes ailes (85) étant montées sur les deuxièmes brides (441) et se trouvant de part et d'autre des deuxièmes éléments de fixation (84) et lesdites deuxièmes ailes (85) reposant alors contre la paroi intérieure de la première plaque latérale (42) ou de la deuxième plaque latérale (43).

13. Toilettes suspendues selon la revendication 12, **caractérisées en ce que** le deuxième bloc de réglage (87) comprend une partie verticale (872) et une partie horizontale (871), la partie verticale (872) formant, avec la partie horizontale (871) sur sa face avant, une forme de L, la partie verticale (872) présentant, en son milieu, un quatrième trou taraudé (8711) dont la position et la taille correspondent au troisième trou taraudé (831), la partie verticale (872) présentant une deuxième fente (8712) au milieu de son dos, une troisième fente (8713) étant située au dos de part et d'autre de la deuxième fente (8712), la partie horizontale (871) étant pourvue d'une deuxième rainure (8721), ladite deuxième rainure (8721) pouvant être encliquetée dans le deuxième mécanisme de serrage (423), le deuxième bloc de réglage (87) étant placé sur le deuxième boulon à vis (83) et le deuxième cylindre de positionnement par le biais de la deuxième fente (8712) et de la troisième fente (8713), ledit deuxième bloc de réglage (87) étant fixé avec la vis pour établir le raccordement entre la plaque latérale (42, 43) et la plaque inférieure de raccordement (44), et la position de montage de la plaque latérale (42, 43) pouvant être réglée en se fondant sur la planéité avec la courbure du corps principal de toilettes (5).

14. Toilettes suspendues selon la revendication 8, éventuellement en lien avec une autre des revendications précédentes, **caractérisées en ce que** le deuxième mécanisme de serrage (423) comprend un troisième élément de serrage (4231) et un quatrième élément de serrage (4232) ; un quatrième élément de serrage (4232) respectif étant monté de part et d'autre du troisième élément de serrage (4231), le troisième élément de serrage (4231) ayant de préférence la forme d'un L courbé vers le bas, ladite partie incurvée vers le bas pouvant être encastrée dans la deuxième rainure (8721), et le quatrième élément de serrage (4232) ayant de préférence une forme plate, et **en ce que** le deuxième élément de fixation (84) est pourvu, sur sa face inférieure, d'un élément élastique (841) rotatif, lequel élément élastique, du fait de son élasticité, repose par le haut sur le quatrième élément de serrage (4232).

15. Toilettes suspendues selon l'une des revendications précédentes, **caractérisées en ce qu'**une portion, incurvée vers le bas, d'un bord extérieur du couvercle d'abattant (1) est un organe de couverture latérale (11), lequel organe de couverture latérale (11) recouvre la première partie de boîtier (321) et la lunette d'abattant (2) lorsque le couvercle d'abattant (1) est en position fermée.
